(19) Europäisches Patentamt
European Patent Office
Office européen des brevets

(11) EP 1 388 581 B1

# (12) EUROPEAN PATENT SPECIFICATION

(45) Date of publication and mention of the grant of the patent:
**06.06.2007 Bulletin 2007/23**

(51) Int Cl.:
*C09D 175/14* (2006.01) *C08K 3/36* (2006.01)
*B32B 27/40* (2006.01) *B32B 27/18* (2006.01)

(21) Application number: **02017750.7**

(22) Date of filing: **08.08.2002**

(54) **Acrylic urethane paint composition**

Acryl-urethan-Beschichtungszusammensetzung

Composition de peinture à base d'urethane acrylique

(84) Designated Contracting States:
**DE FR GB**

(43) Date of publication of application:
**11.02.2004 Bulletin 2004/07**

(73) Proprietor: **NISSAN MOTOR CO., LTD.**
**Yokohama-shi,**
**Kanagawa 221-0023 (JP)**

(72) Inventors:
- **Namiki, Kouji**
  **Chiba-shi,**
  **Chiba 260-0042 (JP)**
- **Nakajima, Masao**
  **Sakura-shi,**
  **Chiba 285-0831 (JP)**
- **Handa, Kouichi**
  **Miura-shi,**
  **Kanagawa 238-0101 (JP)**
- **Numao, Yasuhiro**
  **Zushi-shi,**
  **Kanagawa 249-0003 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 768 351**
**EP-A- 0 881 192**
**US-A- 6 020 419**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to an acrylic urethane paint composition according to the preamble part of independent claim 1 and more particularly to a part and a film to which the acrylic urethane paint composition is applied.

Most plastic exterior parts of an automotive vehicle such as a bumper and a side molding are molded by an injection molding. In most cases, such molded plastic exterior parts are spray-coated with a thermosetting resin paint of acrylic-modified melamine or acrylic-modified isocyanate, and thereafter cross-linking of the thermosetting resin paint is made under baking thus accomplishing painting of the molded plastic exterior parts from the viewpoints of design and scratch resistance. In other words, many steps such as coating the paint on the molded plastic part using a coating facility and drying the coated paint using a drying facility are required thus raising a production cost. Additionally, it is required to take account of operational environmental sanitation and environmental protection since volatile organic solvents are emitted during the drying.

In recent years, a variety of methods have been investigated and proposed in order to solve or reduce the above-discussed problems. One of them is disclosed in JP-2-503077, in which first a composite sheet including a clear or transparent layer, a colored layer and a backup sheet (substrate layer) is preliminarily shaped; and thereafter the preliminarily shaped composite sheet is inserted in a metallic mold, followed by molding a plastic in the metallic mold in a manner that the molded plastic becomes integral with the composite sheet, thus producing a colored molded plastic article.

Furthermore, so-called paint-substitution films to be used in place of a paint at the surface of an injection-molded plastic have been proposed and disclosed in JP-11-207896, JP-11-207898 and JP-11207899. These paint-substitution films are for the purpose of improving the external appearance of the injection-molded plastic and are composite films which include a clear layer, a colored layer and a substrate layer which are successively laminated one upon another. The clear and colored layers are formed of thermoplastic acrylic resin, and the substrate layer is formed of polyolefin resin. The thermoplastic acrylic resin is, in general, high in transparency, surface gloss, weatherability and the like, and therefore development has been made to seek new applications of molded bodies of the thermoplastic acrylic resin for automotive exterior members such as a head lamp, a tail lamp and a glazing. From EP-A-0 768 351 a paint composition as indicated above is known.

However, the above paint-substitution films (composite films) tend to produce a failure in external appearance, i.e., a surface unevenness at the step of a heating treatment during preliminarily shaping the paint substitution films. This phenomena cannot be cancelled even after injection molding of the plastic. As a result, it has been difficult to obtain a molded article having a high image sharpness. Additionally, although the above acrylic resin-based paint-substitution film is good in shapability to the shape of a part, it is not only low in surface hardness so as to be insufficient in scratch resistance but also low in chemical resistance.

An acrylic resin molded body is insufficient in scratch resistance at its surface and therefore tends to undergo damage under contact and collision of dust and the like. Thus, the acrylic resin molded body is degraded in its inherent functions such as esthetical appearance and transparency thereby remarkably lowering its commercial value and becoming unservisable even upon its short time use. Accordingly, improving the scratch resistance has been eagerly required for the surface of the acrylic resin molded body. In this regard, it has been proposed and put into practical use that two-part acrylic urethane resin is coated at the surface of the acrylic resin molded body and thermally hardened thereby improving its scratch resistance. However, if the cross-linkage density is increased to raise the hardness of the coating film so as to improve the scratch resistance, the extensibility of the coating film is insufficient thereby degrading the shapability to the shape of the part. In contrast, if the cross-linkage density is reduced to improve the shapability, the hardness of the coating film becomes insufficient in hardness thereby degrading the scratch resistance.

Furthermore, it has been proposed to coat two-part polyurethane resin at the surface of an acrylic resin molded body and to thermally harden the coated polyurethane resin thereby providing the acrylic resin molded body coated with a hard coat layer which is good in extensibility and in shapability to the shape of a part, as disclosed in JP-09-202706, JP-11-043645 and JP-11-228719. However, although such an acrylic molded body coated with the hard coat layer is improved in chemical resistance, it is low in surface hardness and therefore insufficient in scratch resistance.

In view of the above, it is an objective of the present invention to improve an acrylic urethane paint composition as indicated above, so as to enable sol having a high dispersability and sufficient dispersion effect for the particles.

It is an advantage that the acrylic urethane paint composition may form a coating film high in both chemical resistance and scratch resistance while maintaining a high transparency.

A further advantage is that an interior and an exterior member of an automotive vehicle may be obtained which is provided with a hard coat layer formed of the acrylic urethane paint composition and high in both chemical resistance and scratch resistance while maintaining high transparency and shapability.

A still further advantage is that a paint-substitution film may be obtained which includes a hard coat layer formed of the acrylic urethane paint composition and high in both chemical resistance and scratch resistance while maintaining high transparency and shapability.

The objective is solved according to the present invention by an acrylic urethane paint composition comprising: a two part acrylic urethane resin compound including acrylic polyol dissolved in an aprotic organic solvent, and a prepolymer having at least di-functional isocyanate group; and hydrophobic silica particulate dispersed in said two part acrylic urethane resin compound, wherein said hydrophobic silica particulate comprises a diameter ranging from 5 to 300 nm, and hydroxyl groups existing at a surface of said silica particulate are substituted with hydrophobic groups at a substitution percentage of at least 15%, and that a surface of said hydrophobic silica particulate has been treated by bringing the surface into contact with at least one of a disiloxane compound or a monoalkoxysilane compound.

According to an embodiment of the present invention, said hydrophobic silica particulate is in an amount ranging from 2 to 50 parts by weight relative to 100 parts by weight of a solid content of said acrylic urethane resin compound.

According to a further embodiment of the present invention, said aprotic organic solvent is at least one selected from the group consisting of ketone, carboxylic ester, amide, ether, toluene, and xylene.

According to another embodiment of the present invention, said prepolymer is produced by reacting isocyanate and polyol and by substantially removing unreacted isocyanate, wherein said acrylic urethane paint composition is prepared by mixing said prepolymer with said acrylic polyol having a glass transition temperature ranging from 30 to 100 °C and a hydroxyl value ranging from 10 to 200 mgKOH/g in a manner that an equivalent ratio of NCO/OH is within a range of from 0.5 to 2.0.

According to still another embodiment of the present invention, said isocyanate is at least one selected from the group consisting of aliphatic isocyanate, and alicyclic isocyanate.

Further preferred embodiments of the present invention are laid down in the further subclaims. In the following, the present invention is explained in greater detail by means of several embodiments thereof in conjunction with the accompanying drawings, wherein:

Fig. 1 is a fragmentary sectional view of an example of a paint-substitution film according to the present invention;
Fig. 2 is a fragmentary sectional view of another example of a paint-substitution film according to the present invention; and
Fig. 3 is a perspective view of a preliminarily shaped paint-substitution film used in Examples of the present invention.

According to the present invention, an acrylic urethane paint composition comprises a two-part acrylic urethane resin component including acrylic polyol dissolved in an aprotic organic solvent, and a prepolymer having not less than di-functional isocyanate group. Additionally, hydrophobic silica particulate(s) is dispersed in the two part acrylic urethane resin component and has a diameter ranging from 5 to 300 nm. Hydroxyl groups existing at surface of said silica particulate (s) being substituted with hydrophobic groups at a substitution percentage of not less than 15%.

The present invention has been achieved based on the present inventors' following knowledge obtained as a result of research and development made on a variety of plastic systems into which silica particulate (as reinforcement material) of the solvent-dispersion type is added for the purpose of attaining the goal recited above.

(a) Using aprotic organic solvent suppresses reaction between solvent and isocyanate groups and therefore does not impede hardening reaction of the isocyanate thereby obtaining a hardened coating film having good coating film properties.

(b) By increasing a substitution percentage of hydroxyl groups existing at the surface of each silica particulate with hydrophobic groups at a value of not less than a predetermined level, an uniformly dispersed state of silica particulate can be effectively maintained thereby keeping the transparency of a matrix resin. Simultaneously, hardening reaction between the isocyanate group and the acrylic polyol cannot be further impeded thereby obtaining a good reinforcement effect of the silica particulate.

(c) Silica particulate having a particle diameter smaller than the wavelengths of visible light maintains its high dispersibility in the matrix resin and a high transparency of the matrix resin. Additionally, such silica particulate does not impede hardening reaction between the isocyanate groups and the acrylic polyol, and optimum in particle diameter to reinforce the matrix resin, thereby providing the hardened coating film having good coating film properties.

In the acrylic urethane paint composition according to the present invention, the aprotic organic solvent is used for dissolving the acrylic polyol in the two-part acrylic urethane resin component, and therefore reaction between the solvent and the isocyanate groups can be suppressed thereby promoting hardening of the paint composition so as to improve performance of a coating film of the paint composition. Additionally, the silica particulates are used as a reinforcement material for the paint composition, in which each of the silica particulates has a diameter or particle size ranging from 5 to 300 nm smaller than the wavelengths of visible light. It is to be appreciated that hydroxyl groups inherently exist at the surface of each silica particulate. In the present invention, a major part of the hydroxyl groups existing at the surface of silica particulate(s) are substituted with the hydrophobic groups. The silica particulate(s) in the paint composition has a substitution percentage of not less than 15%. The substitution percentage means a percentage

of the number of the hydroxyl groups substituted with hydrophobic groups, relative to the number of all the hydroxyl groups existing at the surface of the silica particulate(s) when the substitution of the hydrophobic groups has not yet been accomplished. Accordingly, hydrophobic property is provided to the silica particulates, which makes it possible to use the aprotic organic solvent. As a result, dispersion of the silica particulates becomes stable thereby effectively maintaining a high transparency while obtaining a good reinforcement effect for the paint composition.

If the diameter of the hydrophobic silica particulate is smaller than 5 nm, dispersion of the silica particulates becomes unstable so that there is the fear of the silica particulates aggregate thereby degrading the transparency of the paint composition. If the diameter of the hydrophobic silica particulate is larger than 300 nm, it is larger than the wavelengths of visible light thereby degrading the transparency of the paint composition while reducing its reinforcement effect for the matrix resin of the paint composition. Additionally, if the substitution percentage of the hydroxyl groups existing at the surface of the silica particulate with the hydrophobic groups is less than 15%, the hydrophobic property of the silica particulate becomes insufficient so that the dispersion of the silica particulates in the aprotic solvent is degraded while making it impossible to obtain an effective reinforcement effect for the paint composition.

Providing the hydrophobic property to the silica particulate can be accomplished by silylation or silyl-substitution for the hydroxyl groups existing at the surface of the silica particulate by using disiloxane compound and/or monoalkoxysilane which are referred to as a silylation or silyl-substitution agent which has the hydrophobic groups.

The disiloxane compound as the silylation agent is represented by the following general formula:

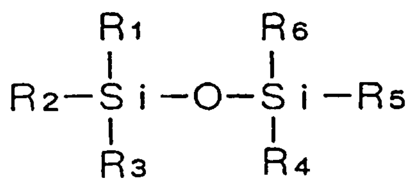

where $R_1$, $R_2$. $R_3$, $R_4$, $R_5$ and $R_6$ are respectively independently substituents each of which is selected from the group consisting of an alkyl group having 1 to 20 carbon atoms and a phenyl group. Examples of the disiloxane compound are hexamethyl disiloxane, 1, 3-dibutyltetramethyl disiloxane, and 1, 3-diphenyltetramethyl disiloxane, 1, and 3-divinyltetramethyl disiloxane, hexamethyl disiloxane and 3-glycydoloxypropylpentamethyl disiloxane. Among these compounds, hexamethyl disiloxane is preferable.

The monoalkoxysilane as the silylation agent is represented by the following general formula:

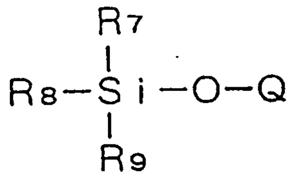

where $R_7$, $R_8$ and $R_9$ are respectively independently substituents each of which is selected from the group consisting of an alkyl group having 1 to 20 carbon atoms and a phenyl group; and Q is a substituent which is an alkyl group having 1 to 3 carbon atoms. Examples of the monoalkoxysilane are trimethylmethoxysilane, trimethylethoxysilane, trimethylpropoxysilane, phenyldimethylmethoxysilane and chloropropylmethylmethoxysilane. Among these compounds, trimethylmethoxysilane, trimethylethoxylsilane and trimethylpropoxysilane are preferable.

The above-listed silyl-substution agent are used singly or in combination in which two or more kinds of the silylation agents may be used. Trialkoxysilane compounds which are frequently used for a surface treatment of organic particle has three bonding groups and therefore high in reactivity; however, the compounds tend to occur their self-condensation and condensation among particles thereby making it difficult to obtain a sol having a high dispersibility. Additionally, many silanol groups which have been bonded and originated from alkoxyl groups tend to remain while making insufficient the dispersion effect for the particles. In this regard, the silylation agent used in the present is monofunctional, and therefore polymerization of the silylation agent itself and cross-linking among silica particulates cannot occur.

Silane halide and silazane compound which are conventionally used as the silylation agent form hydrogen halide or ammonia as byproduct during reaction which halide or ammonia gives rise to aggregation in the sol. In this regard, the silylation agent used in the present invention forms water or alcohol having 1 to 3 carbon atoms as byproduct during reaction which water or alcohol cannot gives rise to aggregation of silica particulates. Additionally, such a byproduct

may be readily removed in a production process of the paint composition.

Among the above-listed silylation agents, hexamethyldisiloxane, trimethylmethoxysilane, trimethylethoxylsilane and trimethylpropoxysilane are particularly preferably used because they are high in reactivity, inexpensive and readily removed and recovered. Such silylation agents have been conventionally used for the purpose of determining of structure of silicate mineral; however, they are usually low in reactivity and therefore used upon making its hydrolysis with an aqueous solution of hydrochloric acid having a pH of not higher than 1. In this regard, it is found that when the silylation agents are contained in a weakly acidic reaction mixture, they are adsorbed to the surface of hydrophilic colloidal silica and thereafter makes a reaction in which silylation for silanol groups at the surface of the colloidal silica is made while forming a slight amount of water. In case that the pH of the reaction mixture exceeds 4.5, this reaction is excessively slowed. Additionally, in order to make the pH lower than 2, it is required to add a large amount of acid to the sol, which is disadvantageous since stability of silica sol itself is degraded. The pH of the reaction mixture means a pH value of a blend of the reaction mixture and pure water of the same weight as the reaction mixture, measured by using a glass electrode method.

It is preferable that the silica particulate having the diameter of not larger than the wavelengths of visible light is added in an amount ranging from 2 to 50 parts by weight relative to 100 parts by weight of a solid content of the acrylic urethane resin component. If the amount is less than 2 parts by weight, the effect of addition of the silica particulate cannot be obtained. If the amount exceeds 50 parts by weight, a good coating film performance of the paint composition can be maintained while degrading the transparency of the paint composition. It is more preferable that the silica particulate is added in an amount ranging from 2 to 30 parts by weight relative to 100 parts by weight of the solid content of the acrylic urethane resin component, from the viewpoint of avoiding a production cost increase.

Preferable examples of the aprotic organic solvent are ketones, carboxylic esters, amides and ethers because such solvents do not have active proton and are high in polarity. Additionally, toluene and xylene are preferable as the aprotic organic solvent because they do not have active proton. In this regard, an organic solvent (such as alcohol) having active proton may react with isocyanate to inhibit hardening of the urethane resin component and therefore is not preferable. Examples of the ketones as the aprotic organic solvent are methylethyl ketone, methylisobutyl ketone and the like. Examples of the carboxylic esters as the aprotic organic solvent are ethyl acetate, butyl acetate and the like. Examples of the amides as the aprotic organic solvent are dimethylacetamide and the like. Examples of the diethyl ethers as the aprotic organic solvent are diethyl ether and the like.

In the present invention, the two-part urethane resin component includes the acrylic polyol dissolved in the aprotic organic solvent, and the prepolymer containing isocyanate groups each having not less than two functional groups as discussed above. The prepolymer is produced from aliphatic isocyanate and/or alicyclic isocyanate. The aliphatic isocyanate having 4 to 30 carbon atoms is preferably used in the present invention. The alicyclic isocyanate having 8 to 30 carbon atoms is preferably used in the present invention. Examples of such aliphatic and alicyclic isocyanates are tetramethylene diisocyanate, pentamethylene diisocyanate, hexamethylene diisocyanate, trimethylhexamethylene diisocyanate, lysine diisocyanate, isophorone diisocyanate, xylylene diisocyanate hydride, 1, 4-cyclohexane diisocyanate, 4, 4''-dicyclohexylmethane diisocyanate, and the like. Among these compounds, hexamethylene diisocyanate is preferable from the viewpoints of weatherability and industrial availability.

As the acrylic polyol of the urethane resin component of the acrylic urethane paint composition of the present invention, conventionally used ones can be used. Accordingly, the acrylic polyol can be prepared by using an acrylic polymer production apparatus provided with a heating device, a stirrer and a monomer pouring device under solution polymerization in the presence of a suitable solvent. The polyol is polyether polyol and/or polyester polyol. The polyether polyol used in the present invention is a known one having a structure in which hydroxyl groups are respectively bonded to the opposite ends of a polyether chain. The polyether polyol used in the present invention is a known one having a structure in which hydroxyl groups are respectively bonded to the opposite ends of a polyester chain.

Typical examples of unsaturated monomers used for production of the acrylic polyol are listed below.

(1) Acrylic monomer containing hydroxyl group:
2-hydroxyethyl acrylate, 2-hydroxyethyl methacrylate, hydroxypropyl methacrylate, hydroxypropyl acrylate and the like.
(2) Radical-polymerizable unsaturated monomer:

(a) Ester of acrylic acid or methacrylic acid: alkyl ester having 1 to 18 carbon atoms and cycloalkyl ester of acrylic acid or methacrylic acid, such as methyl acrylate, ethyl acrylate, propyl acrylate, isopropyl acrylate, butyl acrylate, hexyl acrylate, octyl acrylate, lauryl acrylate, cyclohexyl acrylate, methyl methacrylate, ethyl methacrylate, propyl methacrylate, isopropyl methacrylate, butyl methacrylate, hexyl methacrylate, octyl methacrylate, lauryl methacrylate, cyclohexyl methacrylate, and the like; alkoxyalkyl ester of acrylic acid or methacrylic acid, such as methoxybutyl acrylate, methoxybutyl methacrylate, methoxyethyl acrylate, methoxyethyl methacrylate, ethoxybutyl acrylate, ethoxylbutyl methacrylate, and the like; and adducts (addition products) such as adduct

compound of glycidyl acrylate or glycidyl methacrylate and monocarbonic compound having 3 to 18 carbon atoms (such as acetic acid, propionic acid, oleic acid, stearic acid, lauric acid, p-t-butyl benzoic acid, adduct compound of Cardura E-10 (the trade mane of Shell Kagaku Kabushiki Kaisha) and an unsaturated acid such as acrylic acid, and the like.

(b) Vinyl aromatic compound: styrene, $\alpha$-methyl styrene, vinyltoluene, p-chlorostyrene, vinylpyridine, and the like.

(c) $\alpha$, 1-ethylenic unsaturated carbonic acid: acrylic acid, methacrylic acid, crotonic acid, itaconic acid, maleic acid, maleic anhydride, fumaric acid, and the like.

(d) Vinyl monomer containing glycidyl group: glycidyl acrylate, glycidyl methacrylate, acrylglycidyl ether, and the like;

(e) Amide of acrylic acid or methacrylic acid: acrylamide, N-methylolacrylamide, N-butoxymethylacrylamide, and the like;

(f) Ethylenic unsaturated monomer having alkoxysilane group: 1-methacryloxytrimethoxy silane, and the like;

(g) Others: acrylonitrile, and methacrylonitrile.

The above-listed radical-polymerizable unsaturated monomers are used upon suitable section in accordance with desired resin physical properties, and used singly or in combination in which more than two or more kinds of the monomers are used. Copolymerization itself of the acrylic monomer containing hydroxyl group and the radial-polymerizable unsaturated monomer can be accomplished by known methods, for example, by solution polymerization. Polymerization is usually accomplished under reaction of two or more monomers at a temperature ranging from 40 to 170 °C for a time ranging from 4 to 10 hours in the presence of a polymerization catalyst in a suitable solvent.

Examples of the polymerization catalyst are azo compound, peroxide compound, diazo compound, and redox initiator for radical polymerization. Under the above-discussed polymerization, the acrylic polyol are prepared having a glass transition point (Tg point) which is preferably within a range of from 30 to 100 °C to meet the purposes of the present invention. If the acrylic polyol having the glass transition point exceeding 100 °C is used, the resultant paint composition is degraded in low temperature properties or performances (particularly, impact resistance, flexibility resistance and mechanical strength at low temperatures). If the acrylic polyol having the glass transition point lower than 30 °C is used, there is the possibility of the resultant paint composition being problematic in weatherability.

Here, the glass transition point (Tg point) is calculated from the Tg points (°C) of respective homopolymers according to the following equation:

$$Tg\ (^\circ C) = \frac{1}{\dfrac{W_A}{Tg_A + 273} + \dfrac{W_B}{Tg_B + 273} + \cdot\cdot} - 273$$

where $W_A$ is the % by weight of the homopolymer of a monomer A in the acrylic polyol; $W_B$ is the % by weight of the homopolymer of a monomer B in the acrylic polyol; $Tg_A$ is the Tg point of the homopolymer of the monomer A; and $Tg_B$ is the Tg point of the homopolymer of the monomer B. The Tg points of major homopolymers are shown in "Polymer Handbook ($2^{nd}$ Edition)" published by AWIRE Interscience. In case that the acrylic polyols whose Tg points of homopolymers are not given by "Polymer Handbook" are used, the Tg points of them can be obtained by actually measuring the Tg points of the homopolymers using a dilatometer or a differential scanning calorimeter (DSC).

The acrylic polyol used in the present invention preferably has a hydroxyl value (for plastic) ranging from 10 to 200 mg KOH/g in resin standard. The acrylic polyol having a hydroxyl value (for plastic) lower than 10 is low in cross-linkage density of a coating film of the resultant paint composition and therefore disadvantageously affects the solvent resistance of the resultant paint composition. If the acrylic polyol having a hydroxyl value exceeding 200, the extensibility of the coating film of the resultant paint composition is disadvantageously affected. The hydroxyl value (for plastic) is measured according to JIS (Japanese Industrial Standard) K-1557 (6.4).

The acrylic polyol is readily available in the market, under the trade name of Acrydic A-801 and Acrydic A-802 (manufactured by Dainippon Ink and Chemicals, Inc.), Hitaloid 3008 and Hitaloid 3083 (manufactured by Hitachi Chemical Co., Ltd.), Coatax LH-601 and Coatax LH-603 (manufactured by Toray Industries, Inc.), and the like.

In the present invention, it is preferable that the two-part urethane resin component is prepared by mixing the acrylic polyol (or acrylic polyol ingredient) as a main ingredient and the prepolymer (or isocyanate ingredient) as a hardener to have a NCO/OH equivalent ratio ranging from 0.5 to 2.0. If the equivalent ratio is smaller than 0.5, the coating film of the paint composition is lower in cross-linkage density and therefore is inferior in solvent resistance, water resistance and weatherability. If the equivalent ratio exceeds 2.0 so that the isocyanate ingredient becomes excessive, the coating film of the paint composition not only becomes brittle and low in weatherability but also is unsatisfied in drying property.

At this time, a catalyst for promoting hardening such as triethylamine, tetra (2-ethylhexyl) titanate, di-n-butyltin dilaurate may be added to the mixture of the main ingredient and the hardener.

Stabilizer(s) of hindered phenol, benzotriazole and hindered amine may be added to the acrylic urethane paint composition of the present invention in order to prevent deterioration due to light and deterioration due to oxidation. Examples of the hindered phenol stabilizer are pentaerythrithyl-tetrakis[3-(3,5-di-tertiarybutyl-4-hydroxyphenyl) propionate],2,2'-thiodiethylbis-[3-(3,5-di-tertiarybutyl-4-hydroxyp henyl)propionate], octadecyl-3- (3, 5-di-tertiarybutyl-4-hydroxyphenyl) propionate], 1, 3, 5-tris(4-tertiarybutyl-3-hydroxy-2, 6-dimethyl) isocyanurate, and the like. Examples of the benzotriazole stabilizer are 2-(2-hydroxy-5-methylphenyl)-2H-benzotriazole, 2- (2-hydroxy-3, 5-di-tertiary amylphenyl)-2H-benzotriazole, and the like. Examples of the hindered amine stabilizer are bis(1, 2, 2, 6, 6-tetramethyl-4-piperidyl) sebacate, bis(2, 2, 6, 6-tetramethyl-4-piperidyl) sebacate, 4-benzoyloxy-2, 2, 6, 6-tetramethylpiperidine, and the like. The above-listed compounds may be added in singly or in combination. It is preferable to add the hindered amine and the hindered phenol in combination, or the hindered amine and the benzotriazole in combination. The amount of the stabilizer to be added is within a range of from 100 to 20000 ppm, preferably 500 to 5000 ppm relative to the prepolymer.

The acrylic urethane paint composition is coated or painted on a plastic molded body (a member formed of a plastic) by brush coating, flow coating, spray coating, spin coating, or dipping coating. These coating methods have both advantage and disadvantage and therefore are suitably selected according to the purposes in use. For example, in case that only a part of the plastic molded body is intended to be coated with the paint composition, the brush coating or the flow coating is suitable. In case that the shape of the plastic molded body is complicated, the spray coating is suitable. In case that the plastic molded body is flat and in symmetrical in shape, the spin coating is suitable. In case that the plastic molded body is rod-shaped or sheet-shaped, the dipping coating is suitable.

It is preferable that the coating film of the acrylic urethane paint composition coated on the surface of the plastic molded body has a thickness ranging from 2 to 75 μm. If the thickness is smaller than 2 μm, the hardness (as effect of a hard coat layer) of the coating film is insufficient. If the thickness is larger than 75 μm, the coating film is degraded in extensibility thereby degrading a shapability (shapable ability or property) of the coating film to the shape of the plastic molded body or part.

The acrylic polyurethane paint composition is painted or coated on an automotive plastic interior material or member such as an instrument panel, a door trim, a console, or the like, or on an automotive plastic exterior material or member such as a door, a fender, an engine hood, a roof, or a trunk lid.

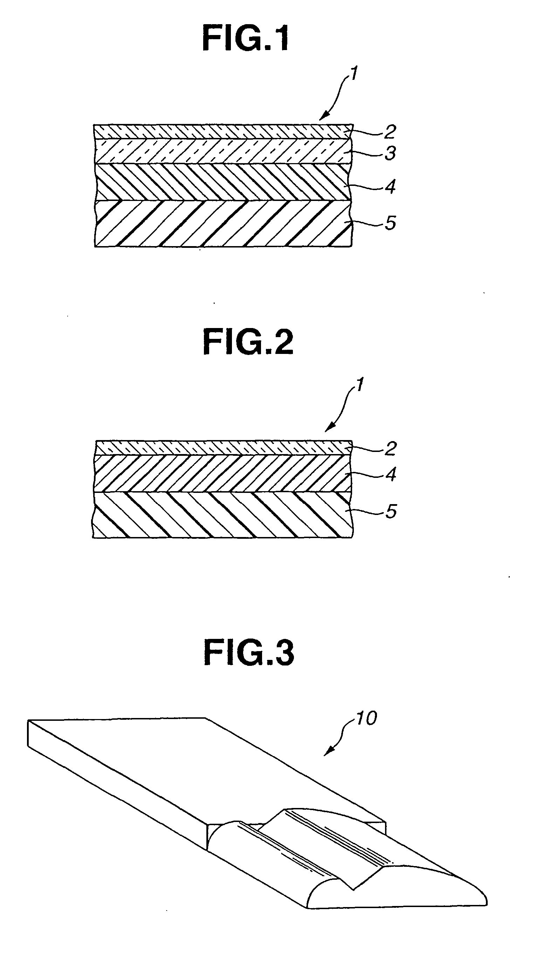

The acrylic polyurethane paint composition is applied to a paint-substitution film which is used in place of a paint. As shown in Fig. 1, paint-substitution film 1 has a multiple layer (four-layer) or laminated structure and includes a hard coat layer 2, a clear layer 3, a colored layer 4 and a substrate layer 5 which are successively laminated on upon another in the order of the layer 5, the layer 4, the layer 3 and the layer 2. Hard coat layer 2 is formed of the above acrylic urethane paint composition and preferably has a thickness ranging from 5 to 20 μm. Clear layer 3 is formed of a thermoplastic acrylic resin such as PMMA (polymethyl methacrylate), AES (acrylonitrile / (ethylene / propylene / diene copolymer) / stylene), AAS (acrylonitrile / acrylic rubber / styrene) and the like, or a mixture of a thermoplastic acrylic resin and a resin containing fluorine. Clear layer 3 preferably has a thickness ranging from 50 to 100 μm. Colored layer 4 is formed of the thermoplastic acrylic resin such as PMMA, AES, AAS or the like or the mixture of the thermoplastic acrylic resin and the fluorine-containing resin, like clear layer 3. Colored layer 4 preferably has a thickness ranging from 150 to 200 μm. Substrate layer 5 is formed of polyolefin resin such as polypropylene, propylene / ethylene block copolymer, TPO (polyolefin thermoplastic elastomer) and the like, or a copolymer such as ABS (acrylonitrile / butadiene / styrene) and PC (polycarbonate), a copolymer of ABS and PBT (polybutylene terephthalate). Substrate layer 5 preferably has a thickness ranging from 200 to 300 μm.

Otherwise, paint-substitution film 1 may have a three-layer or laminated structure as shown in Fig. 2 and includes hard coat layer 2, colored layer 4 and substrate layer 5 which are successively laminated on upon another in the order of the layer 5, the layer 4 and the layer 2. The material and thickness of each layer 2, 4, 5 is the basically same as those in Fig. 1.

Hereinafter, manners of molding an automotive part and the like using the above paint-substitution film (including hard coat layer 2) will be discussed for reference; however, it will be understood that they are mere examples using the acrylic urethane paint composition of the present invention and therefore the present invention is not limited by them.

[Production of Paint-substitution film]

The clear layer and the colored layer are preferably formed on a removable film. More specifically, solutions or dispersions of the plastic materials (synthetic resins) forming the clear and colored layers are successively coated on the releasable film by a known method such as a reverse roller coating method. The solutions or dispersions are prepared respectively by dissolving the plastic material in an organic solvent and by dispersing the plastic material in an organic solvent. In case that the thickness of the layers is smaller, a known gravure coating method may be used. Otherwise, the clear layer and the colored layer may be formed by an extrusion molding according to the plastic material

to be used. The substrate layer may be formed in the form of a film by a known so-called T-shaped die extrusion method. The clear and colored layers formed on the releasable film are laminated or put on the substrate layer of the film form by a so-called thermal lamination method, and thereafter the releasable film is released from the clear and colored layers thereby obtaining a film structure including the substrate layer, the colored layer and the clear layer.

The thus obtained film structure including the substrate layer, the colored layer and the clear layer is coated with the above acrylic urethane paint composition of the present invention by a roller coater, in which the coating film of the acrylic urethane paint composition is formed at the surface of the clear layer. The thus formed coating film of the acrylic urethane paint composition is hardened at ordinary temperature or under heat thereby producing the paint-substitution film having the hard coat layer. In case of using the hardening under heat for the acrylic urethane paint composition, the heating is carried out at a temperature ranging from room temperature to 80 °C, preferably from 40 to 70 °C.

[Molding of Automotive part or the like using Paint-substitution film]

The above paint-substitution film having the hard coat layer is preliminarily shaped or formed under a thermal forming to obtain a three-dimensional shape corresponding to the surface shape of a part (automotive part) to be molded. As the thermal forming, a vacuum forming, a pressure foaming, a vacuum and pressure forming or the like is preferable. Among these forming methods, the vacuum forming is more preferable. In the vacuum forming, for example, the paint-substitution film is heated at its opposite surfaces by using a far infrared radiation ceramic heater. Then, a metallic mold is vertically and laterally moved, upon which a part of the heated paint-substitution film is brought into contact with the metallic mold. Then, air existing between the paint-substitution film and the metallic mold is sucked under vacuum through a vacuum hole formed in the metallic mold, thereby bringing the paint-substitution into tight contact with the metallic mold to be fixed in position. Thereafter, the paint-substitution film is cooled under a forced cooling such as that using a cooling fan, so that the paint-substitution film is shaped or formed into the desired three-dimensional shape corresponding to the part. In order to uniform the extension of the paint-substitution film over the whole body of the part during the vacuum forming, after being hearted and before being sucked under vacuum, air may be blown to the heated paint-substitution film from a direction of the metallic mold so as to inflate the paint-substitution film into a hemispherical shape thus shaping or forming the paint-substitution film into the desired shape.

The thus preliminarily shaped paint-substitution film is set in a cavity of a metallic mold for injection molding upon opening the metallic mold. The cavity has the same shape as the three-dimensional shape of the preliminarily shaped paint-substitution film, i.e., the same shape of the part to be molded. Then, the metallic mold is closed, upon which molten plastic is injected and poured into the cavity. At this time, it is preferable to take account of preventing the preliminarily shaped paint-substitution film fixed in the metallic mold from peeling off from the metallic mold or moving in the metallic mold. Additionally, it is also preferable to take account of kind, number, location, direction and shape of a gate through which the molten plastic is injected and poured into the metallic mold, in order to prevent the injected and poured plastic is flown around to a site between the preliminarily shaped paint-substitution film and the inner surface of the cavity and to prevent wrinkling due to weld lines. Concerning the kind of the gate, a direct gate, a submarine gate or the like is preferable. Concerning the number of the gate, one gate is preferable though taking accounting of the shape of the part to be molded or the fluidity of the injected plastic and the like.

After the molten plastic is injected and poured into the cavity of the metallic mold for injection molding, the metallic mold is opened to take out a molded part or article in a cooled condition in which the molten plastic has been solidified. The molded part is provided at its surface with the paint-substitution film of the present invention, so that the paint-substitution film is integrally adhered to the surface of the molded plastic body (section) of the molded part. As a result, a colored injection-molded part is obtained.

## EXAMPLES

The present invention will be more readily understood with reference to the following Examples in comparison with Comparative Examples; however, these Examples are intended to illustrate the invention and are not to be construed to limit the scope of the invention.

In order to evaluate the performance of the paint-substitution films of Examples and Comparative Examples which were prepared by production methods discussed after, the following evaluation tests were conducted:

1. Scratch resistance test

Rubbing the surface of the paint-substitution film having the hard coat layer with excessively fine (# 0000) steel wool by ten times upon application of a load of about 500 g to the steel wool, thereby scratching the surface of the hard coat layer. The excessively fine steel wool had the trade name of Three ACE and manufactured by Yamazaki Sangyou

Co., Ltd. After completion of ten times rubbings, a scratched condition of the paint-substitution film was inspected by visual observation in order to evaluate the scratch resistance of the paint-substitution film. The result of the inspection by visual observation is shown in Table 1 in which A represents a condition in which no scratch was found, indicating to be high in scratch resistance; B represents a condition in which slight scratch was found, indicating to be medium in scratch resistance ; and C represents a condition in which scratch was found, indicating to be low in scratch resistance.

2. Chemical resistance test

A gauze wetted with each of chemicals, i.e., (a) gasoline, (b) brake fluid and (c) windshield washer fluid was brought into soft touch with the surface of the paint-substitution film having the hard coat layer in a manner that the surface of the paint-substitution film became wetted, and made its reciprocating movements by 2 to 3 times. The gasoline was "Regular Gasoline" produced by Nippon Mitsubishi Oil Corporation. The brake fluid and the windshield washer fluid were so-called genuine fluids of Nissan Motor Co. Ltd. Then, the paint-substitution film was allowed to stand at 60 °C for 24 hours. After this, the chemical was wiped out with an unused gauze. Thereafter, the change of the surface of the paint-substitution film was inspected by visual observation in order to evaluate the chemical resistance of the paint-substitution film. The result of the inspection by visual observation is shown in Table 1 in which A represents a condition in which no external appearance change such as scratch formation, stain formation and blushing was found, indicating to be high in chemical resistance; B represents a condition in which slight scratch formation, stain formation and blushing were found, indicating to be medium in chemical resistance; and C represents a condition in which scratch formation, stain formation and blushing were found, indicating to low in chemical resistance.

3. Shapability test

The abnormality in external appearance of a preliminarily shaped paint-substitution film formed under the vacuum forming was inspected by visual observation in order to evaluate the shapability of the paint-substitution film. The result of the inspection by the visual observation is shown in Table 1 in which A represents a condition in which no abnormality such as crack or peeling was found at the surface of the preliminarily shaped paint-substitution film, indicating to be high in shapability; B represents a condition in which slight crack and peeling were found at the surface of the preliminarily shaped paint-substitution film, indicating to be medium in shapability; and C represents a condition in which crack and peeling were found at the surface of the preliminarily shaped paint-substitution film, indicating to be low in shapability.

4. External appearance test

The abnormality in external appearance of an injection-molded article covered with the paint-substitution film was inspected by visual observation in order to evaluate the external appearance of the paint-substitution film forming a surface portion of the injection-molded article. The result of the inspection by the visual observation is shown in Table 1 in which A represents a condition in which no abnormality was recognized so that no brushing and no disappearance of a surface gloss were found, indicating to be high in external appearance; B represents a condition in which slight brushing and disappearance of a surface gloss were recognized, indicating to be medium in external appearance; and C represents a condition in which brushing, disappearance of a surface gloss and degradation of smoothness of the surface of the paint-substitution film of the injection-molded article were recognized, indicating to be low in external appearance.

EXAMPLE 1

A 2 liter-flask equipped with a thermometer, a condenser and a stirrer was charged with 889.4 g of hexamethylene diisocyanate (HMDI), 200 g of polycaprolactone polyol ("Praccel 308" which was the trade name of Daicel Chemical Industrials, Ltd. and had a number average molecular weight of 850, a hydroxyl value of 195 mgKOH/g). Reaction in the flask was carried at 100 °C for 1 hour under stirring of the content of the flask to obtain a reaction mixture.

The thus obtained reaction mixture was subjected to a so-called thin-film distillation at a temperature of 160 °C at a pressure of 0.2 mmHg, followed by removing unreacted HMDI. As a result, 309.8 g of transparent and light yellow polyisocyanate prepolymer was obtained as a liquid left at the bottom of the flask. The polyisocyanate prepolymer had a NCO concentration of 9.2 % by weight and a viscosity of 4900 cp at a temperature of 25 °C. A gas chromatography analysis of the polyisocyanate prepolymer demonstrated that the polyisocyanate prepolymer contained not more than 0.1 % by weight of free HMDI monomer.

The above synthesized prepolymer in an amount of 10.2 parts by weight was mixed with 25.0 parts by weight of acrylic polyol ("Acrydic A-801" which was the trade mane of Dainippon Ink and Chemicals, Inc. and had a hydroxyl

value of 50 mgKOH/g and a Tg point of 70 °C), 23.1 parts by weight of hydrophobic silica particulate ("EAC-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of ethyl acetate), and 40.5 parts by weight of a dilution mixture solvent (ethyl acetate : butyl acetate : toluene : xylene = 20 : 30 : 30 : 20) thereby obtaining an acrylic urethane paint composition according to the present invention. The acrylic urethane paint composition had an equivalent ratio (NCO in isocyanate / OH in polyol) of 1.0.

The thus obtained acrylic urethane paint composition was coated on a commercially available paint-substitution film ("Avloy" which was the trade mane of Mitsubishi Chemical MKV Company) by using a roller coater to form a hard coat layer having a thickness of 15 μm. As a result, a paint-substitution film having the hard coat layer formed of the acrylic urethane paint composition was obtained.

Then, the paint-substitution film underwent an inspection to seek a temperature range in which a vacuum forming of the paint-substitution film was possible. Thereafter, the vacuum forming of the paint-substitution film was carried out at 150 °C as follows: The paint-substitution film was heated at its opposite surfaces by using a far infrared radiation ceramic heater. Then, a metallic mold is vertically and laterally moved, upon which a part of the heated paint-substitution film was brought into contact with the metallic mold. Then, air existing between the paint-substitution film and the metallic mold was sucked under vacuum through a vacuum hole formed in the metallic mold, thereby bringing the paint-substitution into tight contact with the metallic mold to be fixed in position. Thereafter, the paint-substitution film was cooled under a forced cooling using a cooling fan, completing the vacuum forming. As a result, the paint-substitution film was shaped or formed to obtain a preliminary shaped paint-substitution film 10 shown in Fig. 3. The preliminarily shaped paint-substitution film had a length of about 150 mm, a width of about 70 mm and a thickness of about 8 mm.

The above preliminarily shaped paint-substitution film 10 was set at a surface of a cavity of a metallic mold for injection molding and fixed in position. Then, the metallic mold was closed, followed by injecting and pouring ABS/PBT resin thereby obtaining an injection-molded article. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

EXAMPLE 2

A 2 liter-flask equipped with a thermometer, a condenser and a stirrer was charged with 631.1 g of hexamethylene diisocyanate (HMDI) and 110. 0 g of an equal-weight mixture of two kinds of polycaprolactone polyol ("Praccel 305" which was the trade name of Daicel Chemical Industrials, Ltd. and had a number average molecular weight of 550, a hydroxyl value of 305 mgKOH/g and "Praccel 205" which was the trade name of Daicel Chemical Industrials, Ltd. and had a number average molecular weight of 550, a hydroxyl value of 205 mgKOH/g). Reaction in the flask was carried at 100 °C for 1 hour under stirring of the content of the flask to obtain a reaction mixture.

The thus obtained reaction mixture was subjected to a so-called thin-film distillation at a temperature of 160 °C at a pressure of 0.2 mmHg, followed by removing unreacted HMDI. As a result, 185.4 g of transparent and light yellow polyisocyanate prepolymer was obtained as a liquid left at the bottom of the flask. The polyisocyanate prepolymer had a NCO concentration of 10.1 % by weight and a viscosity of 2800 cp at a temperature of 25 °C. A gas chromatography analysis of the polyisocyanate prepolymer demonstrated that the polyisocyanate prepolymer contained not more than 0.1 % by weight of free HMDI monomer.

The above synthesized prepolymer in an amount of 9.3 parts by weight was mixed with 25.0 parts by weight of acrylic polyol ("Acrydic A-801" which was the trade mane of Dainippon Ink and Chemicals, Inc. and had a hydroxyl value of 50 mgKOH/g and a Tg point of 70 °C), 22.5 parts by weight of hydrophobic silica particulate ("EAC-ST" which was the trade name of Nissan Chemical Industries, Ltd. and had a solid content of 30.5 % by weight, an average particle diameter of 12 nm and a substitution percentage of hydroxyl group with hydrophobic group, of 20 %, and contained a dispersion solvent of ethyl acetate), and 38.4 parts by weight of a dilution mixture solvent (ethyl acetate : butyl acetate : toluene : xylene = 20 : 30 : 30 : 20) thereby obtaining an acrylic urethane paint composition according to the present invention. The acrylic urethane paint composition had an equivalent ratio (NCO in isocyanate / OH in polyol) of 1.0. The acrylic urethane paint composition had no muddiness and precipitate and was good in compatibility with acrylic polyol.

Thereafter, a paint-substitution film having a hard coat layer was obtained in the same procedure as that in Example 1. Additionally, the paint-substitution film was shaped or formed to obtain a preliminarily shaped paint-substitution film in the same procedure as that in Example 1. Further, an injection-molded article covered with the paint-substitution film was obtained in the same procedure as that in Example 1. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

EXAMPLE 3

The procedure in Example 1 was repeated with the exception that 11. 5 parts by weight of hydrophobic silica particulate ("EAC-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of ethyl acetate) was used in place of 23.1 parts by weight of the same hydrophobic silica particulate.

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

EXAMPLE 4

The procedure in Example 1 was repeated with the exception that 34.6 parts by weight of hydrophobic silica particulate ("EAC-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of ethyl acetate) was used in place of 23.1 parts by weight of the same hydrophobic silica particulate.

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

EXAMPLE 5

The procedure in Example 1 was repeated with the exception that 34.3 parts by weight of hydrophobic silica particulate ("DMAC-ST" which was the trade name of Nissan Chemical Industries, Ltd. and had a solid content of 20.5 % by weight, a particle diameter ranging from 10 to 20 nm and a substitution percentage of hydroxyl group with hydrophobic group, of 20 %, and contained a dispersion solvent of dimethylacetamide) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

EXAMPLE 6

The procedure in Example 1 was repeated with the exception that 23.1 parts by weight of hydrophobic silica particulate ("MEK-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of methyl ethyl ketone) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

EXAMPLE 7

The procedure in Example 1 was repeated with the exception that 23.1 parts by weight of hydrophobic silica particulate ("MIBK-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of methyl isobutyl ketone) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 1

A commercially available paint-substitution film ("Avloy" which was the trade mane of Mitsubishi Chemical MKV Company) underwent an inspection to seek a temperature range in which a vacuum forming of the paint-substitution film was possible. Thereafter, the vacuum forming of the commercially available paint-substitution film was carried out at 150 ° C in the same manner as that in Example 1. As a result, the commercially available paint-substitution film was shaped or formed to obtain a preliminary shaped commercially available paint-substitution film of the shape as shown in Fig. 3.

The above preliminarily shaped commercially available paint-substitution film 10 was set at a surface of a cavity of a metallic mold for injection molding and fixed in position. Then, the metallic mold was closed, followed by injecting and pouring ABS/PBT resin thereby obtaining an injection-molded article. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 2

The procedure in Example 1 was repeated with the exception that no hydrophobic silica particulate was contained in the acrylic polyurethane paint composition.

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 3

The procedure in Example 1 was repeated with the exception that 23.1 parts by weight of hydrophilic silica particulate ("MA-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of about 0 %, and contained a dispersion solvent of methanol) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 4

The procedure in Example 1 was repeated with the exception that 23.1 parts by weight of hydrophilic silica particulate ("IPA-ST" which was the trade name of Nissan Chemical Industries, Ltd. and had a solid content of 30.5 %

by weight, a particle diameter ranging from 10 to 20 nm and a substitution percentage of hydroxyl group with hydrophobic group, of about 0 %, and contained a dispersion solvent of isopropanol) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 5

The procedure in Example 1 was repeated with the exception that 34.3 parts by weight of hydrophilic silica particulate ("EG-ST-ZL" which was the trade name of Nissan Chemical Industries, Ltd. and had a solid content of 20.5 % by weight, a particle diameter ranging from 10 to 20 nm and a substitution percentage of hydroxyl group with hydrophobic group, of about 0 %, and contained a dispersion solvent of ethylene glycol) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 6

The procedure in Example 1 was repeated with the exception that 34.3 parts by weight of hydrophilic silica particulate ("NPC-ST" which was the trade name of Nissan Chemical Industries, Ltd. and had a solid content of 20.5 % by weight, a particle diameter ranging from 10 to 20 nm and a substitution percentage of hydroxyl group with hydrophobic group, of about 0 %, and contained a dispersion solvent of ethylene glycol mono n-propyl ether) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 7

The procedure in Example 1 was repeated with the exception that 23.1 parts by weight of hydrophobic silica particulate ("XBA-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of xylene and n-buthanol) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 8

The procedure in Example 1 was repeated with the exception that 23.1 parts by weight of silica particulate (produced by Nissan Chemical Industries, Ltd. and having a solid content of 30.5 % by weight, a particle diameter ranging from 10 to 20 nm and a substitution percentage of hydroxyl group with hydrophobic group, of 5 %, and containing a dispersion solvent of ethyl acetate; dispersion was poor so that precipitation was found) was used in place of 23.1 parts

by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 9

The procedure in Example 1 was repeated with the exception that 23.1 parts by weight of hydrophobic silica particulate (produced by Nissan Chemical Industries, Ltd. and having a solid content of 30.5 % by weight, an average particle diameter of 3 nm and a substitution percentage of hydroxyl group with hydrophobic group, of 20 %, and containing a dispersion solvent of ethyl acetate) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 10

The procedure in Example 1 was repeated with the exception that 23.1 parts by weight of hydrophobic silica particulate (produced by Nissan Chemical Industries, Ltd. and having a solid content of 30.5 % by weight, an average particle diameter of 350 nm and a substitution percentage of hydroxyl group with hydrophobic group, of 20 %, and containing a dispersion solvent of ethyl acetate) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 11

The procedure in Example 1 was repeated with the exception that 1.2 parts by weight of hydrophobic silica particulate ("MEK-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of methyl ethyl ketone) was used in place of 23.1 parts by weight of the hydrophobic silica particulate ("EAC-ST").

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 12

The procedure in Example 1 was repeated with the exception that 80.8 parts by weight of hydrophobic silica particulate ("MEK-ST" which was the trade name of Nissan Chemical Industries, Ltd. and had a solid content of 30.5 % by weight, a particle diameter ranging from 10 to 20 nm and a substitution percentage of hydroxyl group with hydrophobic group, of 20 %, and contained a dispersion solvent of methyl ethyl ketone) was used in place of 23.1 parts by weight of the hydrophobic silica particulate ("EAC-ST").

As a result, a paint-substitution film having a hard coat layer was obtained. Additionally, the paint-substitution

film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 13

The procedure in Example 1 was repeated with the exception that 4.1 parts by weight of the synthesized prepolymer was used in place of 10. 2 parts by weight of the synthesized prepolymer, so that the acrylic urethane paint composition of Comparative Example 13 had an equivalent ratio (NCO in isocyanate / OH in polyol) of 0.4.

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

COMPARATIVE EXAMPLE 14

The procedure in Example 1 was repeated with the exception that 22.5 parts by weight of the synthesized prepolymer was used in place of 10. 2 parts by weight of the synthesized prepolymer, so that the acrylic urethane paint composition of Comparative Example 14 had an equivalent ratio (NCO in isocyanate / OH in polyol) of 0.4.

As a result, a paint-substitution film having a hard coat layer was obtained. Additionally, the paint-substitution film was shaped or formed to obtain a preliminarily shaped paint-substitution film. Further, an injection-molded article covered with the paint-substitution film was obtained. In order to evaluate the scratch resistance and the chemical resistance of the paint-substitution film, the shapability of the preliminarily shaped paint-substitution film and the external appearance of the injection-molded article, the above-discussed tests were conducted. The test results are shown in Table 1.

**TABLE 1**

| Item | Scratch resistance | Chemical resistance | | | Shapability | Appearance after molded |
|---|---|---|---|---|---|---|
| | | Gasoline | Brake fluid | Windshield washer fluid | | |
| Example 1 | A | A | A | A | A | A |
| Example 2 | A | A | A | A | A | A |
| Example 3 | A | A | A | A | A | A |
| Example 4 | A | A | A | A | A | A |
| Example 5 | A | A | A | A | A | A |
| Example 6 | A | A | A | A | A | A |
| Example 7 | A | A | A | A | A | A |
| Compar. Example 1 | C | B | B | C | A | A |
| Compar. Example 2 | C | A | A | B | A | A |
| Compar. Example 3 | C | B | B | C | B | B |
| Compar. Example 4 | C | B | B | C | B | B |
| Compar. Example 5 | C | B | B | C | B | B |

(continued)

| Item | Scratch resistance | Chemical resistance | | | Shapability | Appearance after molded |
|---|---|---|---|---|---|---|
| | | Gasoline | Brake fluid | Windshield washer fluid | | |
| Compar. Example 6 | C | B | B | C | B | B |
| Compar. Example 7 | C | B | B | C | B | B |
| Compar. Example 8 | C | B | B | C | C | C |
| Compar. Example 9 | C | B | B | C | C | C |
| Compar. Example 10 | A | A | A | A | A | C |
| Compar. Example 11 | C | A | A | B | A | A |
| Compar. Example 12 | A | A | A | A | B | C |
| Compar. Example 13 | B | B | B | C | A | A |
| Compar. Example 14 | A | A | A | A | C | C |

Next, discussion will be made on examples for molding interior and exterior members of an automotive vehicle using a paint-substitution film of the present invention.

EXAMPLE 8

The acrylic urethane paint composition prepared in Example 1 was coated on a commercially available paint-substitution film ("Avloy" which was the trade mane of Mitsubishi Chemical MKV Company) by using a roller coater to form a hard coat layer having a thickness of 15 μm after hardened, followed by drying at 70°C for 30 minutes. As a result, a paint-substitution film having the hard coat layer formed of the acrylic urethane paint composition was obtained, in which the hard coat layer was formed on the commercially available paint-substitution film. Thereafter, this paint-substitution film was subjected to a vacuum forming at 150 °C in the same manner as that in Example 1, in which the paint-substitution film was preliminarily shaped to the shape of a rear fender of the automotive vehicle. This preliminarily shaped paint-substitution film was set at a surface of a cavity of a metallic mold for injection molding and fixed in position. Then, the metallic mold was closed, followed by injecting and pouring ABS/PBT resin thereby obtaining an injection-molded rear fender.

As a result of evaluation tests, it has been recognized that the preliminarily shaped paint-substitution film (having the hard coat layer formed of the acrylic urethane paint composition) produced by the vacuum forming has no crack and peeling at the surface of the hard coat layer while exhibiting an excellent shapability. Additionally, it has been also recognized that no abnormality is found in external appearance of the injection-molded rear fender as the final product so that no brushing and no disappearance of surface gloss were recognized.

EXAMPLE 9

The acrylic urethane paint composition prepared in Example 1 was coated on a commercially available paint-substitution film ("Avloy" which was the trade mane of Mitsubishi Chemical MKV Company) by using a roller coater to form a hard coat layer having a thickness of 15 μm after hardened, followed by drying at 70°C for 30 minutes. As a result, a paint-substitution film having the hard coat layer formed of the acrylic urethane paint composition was obtained, in which the hard coat layer was formed on the commercially available paint-substitution film. Thereafter, this paint-substitution film was subjected to a vacuum forming at 150 °C in the same manner as that in Example 1, in which the

paint-substitution film was preliminarily shaped to the shape of an instrument panel of the automotive vehicle. This preliminarily shaped paint-substitution film was set at a surface of a cavity of a metallic mold for injection molding and fixed in position. Then, the metallic mold was closed, followed by injecting and pouring ABS/PBT resin thereby obtaining an injection-molded instrument panel.

As a result of evaluation tests, it has been recognized that the preliminarily shaped paint-substitution film (having the hard coat layer formed of the acrylic urethane paint composition) produced by the vacuum forming has no crack and peeling at the surface of the hard coat layer while exhibiting an excellent shapability. Additionally, it has been also recognized that no abnormality is found in external appearance of the injection-molded instrument panel as the final product so that no brushing and no disappearance of a surface gloss were recognized.

As appreciated from the above, the acrylic urethane paint composition of the present invention comprises the two-part acrylic urethane resin component which includes acrylic polyol dissolved in an aprotic organic solvent, and a prepolymer having not less than di-functional isocyanate group. Additionally, the two part acrylic urethane resin contains hydrophobic silica particulate which has the diameter smaller than the wavelengths of visible light and the relatively high substitution percentage of hydroxyl groups existing at the surface of each silica particulate with hydrophobic groups, thereby exhibiting high coating film performance and transparency. Accordingly, the acrylic urethane paint composition of the present invention forms, for example, on a plastic member a hard coat layer high in shapability, chemical resistance and scratch resistance.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

**1.** An acrylic urethane paint composition comprising:

a two part acrylic urethane resin compound including acrylic polyol dissolved in an aprotic organic solvent, and a prepolymer having at least di-functional isocyanate group; and
hydrophobic silica particulate dispersed in said two part acrylic urethane resin compound,

**characterized in that** said hydrophobic silica particulate comprises a diameter ranging from 5 to 300 nm, and hydroxyl groups existing at a surface of said silica particulate are substituted with hydrophobic groups at a substitution percentage of at least 15%, and that a surface of said hydrophobic silica particulate has been treated by bringing the surface into contact with at least one of a disiloxane compound or a monoalkoxysilane compound.

**2.** An acrylic urethane paint composition according to claim 1, **characterized in that** said hydrophobic silica particulate is in an amount ranging from 2 to 50 parts by weight relative to 100 parts by weight of a solid content of said acrylic urethane resin compound.

**3.** An acrylic urethane paint composition according to claim 1 or 2,
**characterized in that** said aprotic organic solvent is at least one selected from the group consisting of ketone, carboxylic ester, amide, ether, toluene, and xylene.

**4.** An acrylic urethane paint composition according to at least one of the claims 1 to 3, **characterized in that** said prepolymer is produced by reacting isocyanate and polyol and by substantially removing unreacted isocyanate, wherein said acrylic urethane paint composition is prepared by mixing said prepolymer with said acrylic polyol having a glass transition temperature ranging from 30 to 100 °C and a hydroxyl value ranging from 10 to 200 mgKOH/g in a manner that an equivalent ratio of NCO/OH is within a range of from 0.5 to 2.0.

**5.** An acrylic urethane paint composition according to claim 4, **characterized in that** said isocyanate is at least one selected from the group consisting of aliphatic isocyanate, and alicyclic isocyanate.

**6.** An interior or exterior member of an automotive vehicle comprising:

a main body formed of plastic; and
a coating film fixedly laminated onto a surface of said main body and
formed of an acrylic urethane paint composition according to claim 1.

**7.** A paint substitution film (1, 10) comprising:

a substrate layer (5);
a clear layer (3) laminated onto said substrate layer (5); and
a hard coat layer (2) laminated onto said clear layer (3), wherein said hard coat layer (2) is a coating film formed of an acrylic urethane paint composition according to claim 1.

**8.** A paint substitution film (1, 10) comprising:

a substrate layer (5); and
a hard coat layer (2) laminated onto said substrate layer (5), wherein said hard coat layer (2) is a coating film formed of an acrylic urethane paint composition according to claim 1.

**Patentansprüche**

**1.** Acryl- Urethan- Beschichtungszusammensetzung, aufweisend:

eine zweiteilige Acryl- Urethankunststoffverbindung, die acrylisches Polyol , gelöst in einem aprotischen organischen Lösungsmittel, enthält und ein Prepolymer, das zumindest eine di- funktionale Isozyanitgruppe hat; und
hydrophobische Kieselerde, teilweise dispergiert in der zweiteiligen Acryl- Urethankunststoff- Verbindung,

**dadurch gekennzeichnet, dass** die hydrophoben Kieselerdeteilchen einen Durchmesser aufweisen, der von 5 bis 300 nm reicht, und Hydroxylgruppen, die an einer Oberfläche der Kieselerdeteilchen vorhanden sind, durch hydrophobe Gruppen bei einem Substitutionsprozentsatz von zumindest 15 % substituiert sind und dass eine Oberfläche der hydrophoben Kieselerdeteilchen durch in Kontaktbringen der Oberfläche mit zumindest einem von einer Disiloxan- Verbindung oder einer Monoalkoxysilan- Verbindung behandelt worden ist.

**2.** Acryl- Urethan- Beschichtungszusammensetzung nach Anspruch 1, **dadurch gekennzeichnet, dass** hydrophoben Kieselerdeteilchen in einer Menge sind, die von 2 bis 50 Gewichtsteilen in Bezug auf 100 Gewichtsteile eines festen Gehalts der Acryl- Urethankunststoffverbindung reicht.

**3.** Acryl- Urethan- Beschichtungszusammensetzung nach Anspruch 1 oder 2, **dadurch gekennzeichnet, dass** das aprotische organische Lösungsmittel zumindest eines ausgewählt aus einer Gruppe ist, die aus Keton, Carboxyl-Esther, Amid, Esther, Toluen und Xylen besteht.

**4.** Acryl- Urethan- Beschichtungszusammensetzung nach zumindest einem der Ansprüche 1 bis 3, **dadurch gekennzeichnet, dass** das Prepolymer durch reagierend von Isocyanat und Polyol und durch im wesentlichen Entfernen von nichtreagiertem Isocyanat erzeugt wird, wobei die Acryl- Urethan- Beschichtungszusammensetzung vorbereitet wird durch Mischen des Prepolymers mit dem acrylischen Polyol, das bei einer Glasumwandlungstemperatur, die von 30 bis 100°C reicht, und einem Hydroxylwert, der von 10 bis 200 mgKOH/g in einer Weise reicht, dass ein Äquivalenzverhältnis von NCO/OH innerhalb eines Bereiches von 0,5 bis 2,0 ist.

**5.** Acryl- Urethan- Beschichtungszusammensetzung nach Anspruch 4, **dadurch gekennzeichnet, dass** das Isocyanat zumindest ein ausgewähltes aus der Gruppe ist, die aus alipatischem Isocyanat und alicyclischem Isocyanat besteht.

**6.** Innen- oder Außenteil eines Kraftfahrzeuges, aufweisend:

einen Hauptkörper, gebildet aus Kunststoff; und
einen Überzugfilm, der fest laminiert auf eine Oberfläche des Hauptkörpers und aus einer Acryl- Urethan-Beschichtungszusammensetzung nach Anspruch 1 gebildet ist.

**7.** Beschichtungssubstitutionsfilm (1, 10), aufweisend:

eine Substratschicht (5);
eine Klarschicht (3), laminiert auf der Substratschicht (5); und
eine Hart- Überzugsschicht (2), laminiert auf der Klarschicht (3), wobei die Hart-Überzugsschicht (2) ein Überzugsfilm ist, der aus einer Acryl- Urethan- Beschichtungszusammensetzung nach Anspruch 1 gebildet ist.

**8.** Beschichtungssubstitutionsfilm (1, 10), aufweisend:

eine Substratschicht (5); und
eine Hart- Überzugsschicht (2), laminiert auf der Substratschicht (5), wobei die Hart- Überzugsschicht (2) ein Überzugsfilm ist, der aus einer Acryl- Urethan- Beschichtungszusammensetzung nach Anspruch 1 gebildet ist.

**Revendications**

**1.** Composition de peinture à base d'uréthane acrylique comprenant:

un composé de résine d'uréthane acrylique en deux parties comprenant un polyol acrylique dissous dans un solvant organique aprotique et un prépolymère ayant au moins un groupe isocyanate difonctionnel; et
des particules de silice hydrophobe dispersées dans ledit composé de résine d'uréthane acrylique en deux parties,

**caractérisée en ce que** lesdites particules de silice hydrophobe comprennent un diamètre allant de 5 à 300 nm, et des groupes hydroxyle existant au niveau d'une surface desdites particules de silice sont remplacés par des groupes hydrophobes à un pourcentage de substitution d'au moins 15 %, et **en ce qu'**une surface desdites particules de silice hydrophobe a été traitée en mettant la surface en contact avec au moins l'un parmi un composé de disiloxane ou un composé de monoalcoxysilane.

**2.** Composition de peinture à base d'uréthane acrylique selon la revendication 1, **caractérisée en ce que** lesdites particules de silice hydrophobe sont en une quantité allant de 2 à 50 parties en poids par rapport à 100 parties en poids d'une teneur en solides dudit composé de résine d'uréthane acrylique.

**3.** Composition de peinture à base d'uréthane acrylique selon la revendication 1 ou 2, **caractérisée en ce que** ledit solvant organique aprotique est au moins l'un choisi dans le groupe constitué par une cétone, un ester carboxylique, un amide, un. éther, le toluène et le xylène.

**4.** Composition de peinture à base d'uréthane acrylique selon au moins l'une des revendications 1 à 3, **caractérisée en ce que** ledit prépolymère est produit en faisant réagir de l'isocyanate et un polyol et en éliminant sensiblement l'isocyanate n'ayant pas réagi, dans laquelle ladite composition de peinture à base d'uréthane acrylique est préparée en mélangeant ledit prépolymère audit polyol acrylique ayant une température de transition vitreuse allant de 30 à 100°C et un indice d'hydroxyle allant de 10 à 200 mg KOH/g d'une manière telle qu'un rapport équivalent de NCO/OH est dans une gamme de 0,5 à 2,0.

**5.** Composition de peinture à base d'uréthane acrylique selon la revendication 4, **caractérisée en ce que** ledit isocyanate est au moins l'un choisi dans le groupe constitué par un isocyanate aliphatique et un isocyanate alicyclique.

**6.** Organe intérieur ou extérieur d'un véhicule automobile comprenant:

un corps principal formé de matière plastique; et
un film de revêtement stratifié de manière fixe sur une surface dudit corps principal et formé d'une composition de peinture à base d'uréthane acrylique selon la revendication 1.

**7.** Film de substitution en peinture (1, 10) comprenant:

une couche de substrat (5);
une couche claire (3) stratifiée sur ladite couche de substrat (5); et
une couche dure (2) stratifiée sur ladite couche claire (3), dans lequel ladite couche dure (2) est un film de revêtement formé d'une composition de peinture à base d'uréthane acrylique selon la revendication 1.

**8.** Film de substitution en peinture (1, 10) comprenant:

une couche de substrat (5); et
une couche dure (2) stratifiée sur ladite couche de substrat (5), dans lequel ladite couche dure (2) est un film de revêtement formé d'une composition de peinture à base d'uréthane acrylique selon la revendication 1.

FIG.1

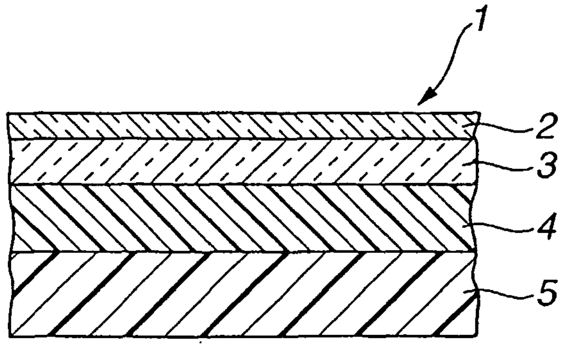


FIG.2

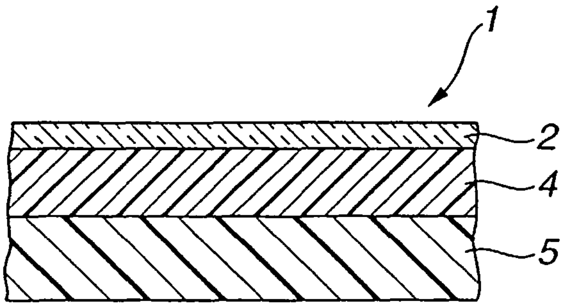


FIG.3